# EUROPEAN PATENT APPLICATION

(11) **EP 4 481 933 A1**
(43) Date of publication of application: **25.12.2024**
(21) Application number: 23891928.6
(22) Date of filing: 10.11.2023
(51) Int. Cl.: H01M 50/54, H01M 50/536, B21D 5/01, B21D 39/02

(54) **ELECTRODE ASSEMBLY HAVING CURVED TAB BUNDLE, AND ELECTRODE ASSEMBLY TAB BUNDLE FORMING DEVICE FOR MANUFACTURING SAME**

(30) Priority: 14.11.2022 KR 20220152082
(71) Applicant: LG Energy Solution, Ltd., Seoul 07335 (KR)
(72) Inventor: MYUNG, Eui Hoon, Daejeon 34122 (KR); KIM, Do Hyeon, Daejeon 34122 (KR)
(74) Representative: Plasseraud IP
(86) International application number: PCT/KR2023/018083
(87) International publication number: WO 2024/106861

(57) **Abstract**

The present invention relates to an electrode assembly configured such that a separator is interposed between a plurality of electrodes each having an electrode tab protruding therefrom and the electrode tabs are stacked to form a tab bundle, wherein the tab bundle defines a convex portion and a concave portion successively formed so as to extend in a longitudinal direction of the electrodes. The convex portion and the concave portion formed at the tab bundle ensure the length margin of the electrode tabs to prevent tab breakage.

## Description

### [Technical Field]

This application claims the benefit of priority to Korean Patent Application No. 2022-0152082 filed on November 14, 2022, the disclosure of which is incorporated herein by reference in its entirety.

The present invention relates to an electrode assembly having a curved tab bundle and an electrode assembly tab bundle forming apparatus for manufacturing the same. More particularly, the present invention relates to an electrode assembly configured to have a structure in which stress applied to electrode tabs extending from the electrode assembly is reduced and an electrode assembly tab bundle forming apparatus for manufacturing the same.

### [Background Art]

Lithium secondary batteries may be classified based on the type of a battery case in which an electrode assembly is received. The lithium secondary batteries may be classified into a prismatic battery cell including a metal can-shaped battery case, a cylindrical battery cell including a metal can-shaped battery case, and a pouch-shaped battery cell made of a laminate sheet including a resin layer and a metal layer.

The pouch-shaped battery cell has the advantages of easy shape deformation and high energy density.

Generally, the pouch-shaped battery cell is manufactured by receiving an electrode assembly and an electrolyte solution in a pouch-shaped battery case and sealing the pouch-shaped battery case, wherein electrode tabs protruding from the electrode assembly extend in a straight line without a separate shape to constitute an electrode tab bundle, and pre-welding may be performed in this state.

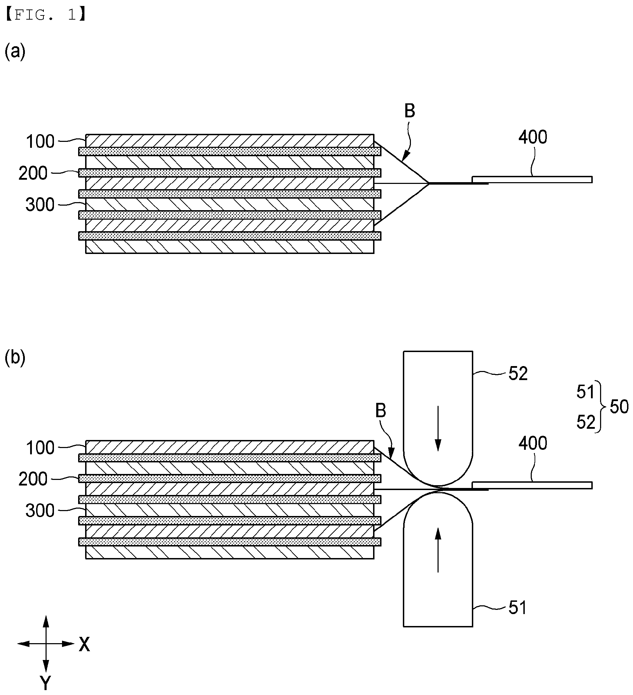

In this regard, FIG. 1 is a front view of a conventional electrode assembly and a forming apparatus for forming the same.

First, referring to (a) of FIG. 1, the electrode assembly is configured such that negative electrodes 100 and positive electrodes 300 are stacked in the state in which separators 200 are interposed therebetween, wherein electrode tabs extending from one-side outer peripheries of the negative electrodes 100 of the electrode assembly are pre-welded in the state in which a tab bundle B is formed, and a right end of the tab bundle B is coupled to an electrode lead 400 by welding.

In this case, the electrode tabs are vulnerable to movement of the electrode assembly or stress applied to the electrode assembly in a longitudinal direction (an X-axis direction), and when the electrode assembly swells during the charging and discharging process, the electrode tabs expand in a thickness direction (a Y-axis direction), whereby the electrode tabs may be broken.

In addition, as shown in (b) of FIG. 1, the tab bundle may be bent using a forming apparatus 50 including a first die 51 and a second die 52. Specifically, the first die 51 may press the tab bundle B under the tab bundle and the second die 52 may press the tab bundle B above the tab bundle to deform the tab bundle B such that the outermost tabs of the tab bundle are rounded.

In this case, safety may be improved for expansion in the thickness direction (the Y-axis direction) due to the length margin of the outermost tabs, but for movement in the longitudinal direction (the X-axis direction), there is no length margin of the inner tabs, whereby there is still a high possibility of breakage due to movement or stress in the longitudinal direction (the X-axis direction).

In this regard, Patent Document 1, which relates to an electrode assembly manufacturing method and an electrode assembly manufacturing apparatus, discloses a rod process in which a pair of rods is located at an electrode assembly side at a part at which electrode tabs are welded and the pair of rods is moved in a direction in which the pair of rods faces each other so as to come into tight contact with opposite sides of the electrode tabs in order to prevent dust generated during welding from moving to the electrode assembly before a pre-welding process.

Although Patent Document 1 discloses a method and structure capable of preventing excessive tension from being applied to the electrode tabs when welding the electrode tabs using the pair of rods, the electrode tab bending structure disclosed in Patent Document 1 is difficult to secure safety against swelling in the thickness direction.

Patent Document 2 relates to a secondary battery manufacturing method and a secondary battery manufactured using the same, wherein a horn and an anvil for temporarily joining multiple tabs are configured such that the horn has a protrusion protruding toward the anvil and the anvil has a recess corresponding to the protrusion, whereby each of the multiple tabs has a bent portion. An addition process of bending the multiple tabs is omitted, whereby the process is simplified.

In Patent Document 2, however, the bent portion of each of the multiple tabs is formed at a temporarily joined part, and therefore a tab bundle of the multiple tabs extending from the electrode plates excluding the bent portions is still vulnerable to stress or expansion in a longitudinal direction or a thickness direction.

### (Prior Art Documents)

(Patent Document 1) Korean Patent Application Publication No. 2020-0105272 (2020.09.07)
(Patent Document 2) Korean Patent Application Publication No. 2016-0060221 (2016.05.30)

### [Disclosure]

### [Technical Problem]

The present invention has been made in view of the above problems, and it is an object of the present invention to provide an electrode assembly configured such that the length margin of a tab bundle constituted by electrode tabs stacked while overlapping each other in a longitudinal direction and a thickness direction is secured, whereby breakage of the electrode tabs is prevented, and an electrode assembly tab bundle forming apparatus for manufacturing the same.

### [Technical Solution]

An electrode assembly according to the present invention to accomplish the above object is configured such that a separator is interposed between a plurality of electrodes each having an electrode tab protruding therefrom and the electrode tabs are stacked to form a tab bundle (B), wherein the tab bundle (B) defines a convex portion and a concave portion are successively formed so as to extend in a longitudinal direction of the electrodes.

One end of the tab bundle (B) in tight contact with an electrode lead may be a flat portion.

The flat portion may be pre-welded.

The convex portion and the concave portion may be formed at the remaining part of the tab bundle excluding the flat portion.

The convex portion and the concave portion may be successively formed in each of the electrode tabs comprising the tab bundle.

There is provided an apparatus for forming a tab bundle of the electrode assembly, the apparatus including a first die configured to be disposed at a first surface of the tab bundle (B); and a second die configured to be disposed at a second surface of the tab bundle (B), wherein the first die includes at least two guide portions spaced apart from each other by a predetermined distance, and the second die is configured to face a gap defined between the at least two guide portions of the first die.

An end of each guide portion configured to face the first surface of the tab bundle (B) may be convex.

An end of the second die facing the second surface of the tab bundle may be convex.

The at least two guide portions of the first die may be driven independently from one another.

Lower ends of the at least two guide portions of the first die may be connected to each other so as to have an integral structure.

A connection portion between the at least two guide portions may have a recess having a shape corresponding to the end of the second die.

The end of the second die may be convex, and the recess may be concave.

There is provided a method of manufacturing the electrode assembly, the method including a first step of stacking a plurality of electrodes each having an electrode tab protruding therefrom such that a separator is interposed therebetween to form a tab bundle (B) of identical electrodes; a second step of locating a first die at a first surface of the tab bundle (B) and locating a second die at a second surface of the tab bundle (B); and a third step of moving the first die and/or the second die toward the tab bundle (B) to bend the tab bundle (B), wherein the first die includes at least two guide portions spaced apart from each other by a predetermined distance, an end of each of the at least two guide portions facing the first surface being convex, and the second die faces a gap defined between the at least two guide portions of the first die, an end of the second die being convex.

The method may further include a fourth step of pre-welding an end part of the tab bundle (B).

The method may further include a fifth step of cutting a tip end of the tab bundle (B).

In addition, the present invention may provide various combinations of the above solving means.

### [Advantageous Effects]

As is apparent from the above description, the present invention has the advantage that a convex portion and a concave portion are successively formed at a tab bundle constituted by stacked electrode tabs extending from a plurality of electrodes, whereby it is possible to secure the length margin not only in a longitudinal direction but also in a thickness direction, and therefore it is possible to prevent breakage of the electrode tabs.

### [Description of Drawings]

FIG. 1 is a front view of a conventional electrode assembly and a forming apparatus for forming the same.
FIG. 2 is a perspective view of an electrode assembly according to the present invention.
FIG. 3 is a perspective view of electrode assembly tab bundle forming apparatuses according to a first embodiment and a second embodiment of the present invention.
FIG. 4 is a perspective view of electrode assembly tab bundle forming apparatuses according to a third embodiment and a fourth embodiment of the present invention.
FIG. 5 is a flowchart of an electrode assembly manufacturing method according to the present invention.
FIG. 6 is a schematic view showing an electrode assembly manufacturing process according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

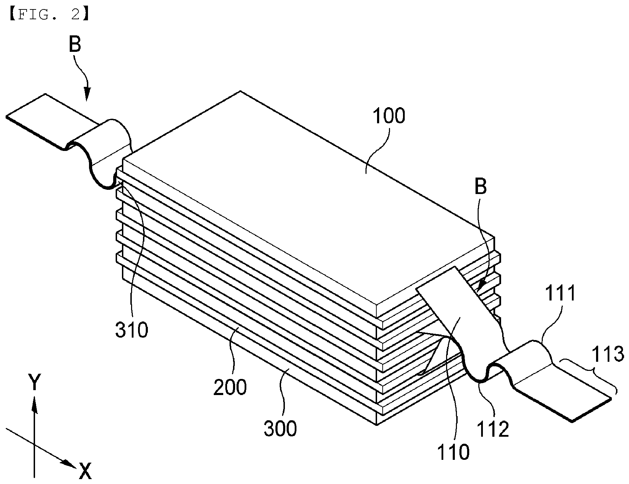

FIG. 2 is a perspective view of an electrode assembly according to the present invention. Referring to FIG. 2, the electrode assembly according to the present invention is configured such that a negative electrode 100 and a positive electrode 300 are stacked in the state in which a separator 200 is interposed therebetween, wherein the negative electrode 100 and the positive electrode 300 include a negative electrode tab 110 and a positive electrode tab 310 protruding in opposite directions, respectively.

Negative electrode tabs 110 are stacked to constitute a negative electrode tab bundle B, and positive electrode tabs 310 are stacked to constitute a positive electrode tab bundle B. Since the negative electrode tab bundle B and the positive electrode tab bundle B are identical in construction to each other, a description will be given based on the negative electrode tab bundle B.

Each of the negative electrode tabs 110 constituting the negative electrode tab bundle B is provided with a convex portion 111 and a concave portion 112 extending in a longitudinal direction of the negative electrode 100 (an X-axis direction), and a flat portion 113 is formed at a tip end of each of the negative electrode tabs.

That is, in the electrode assembly according to the present invention, each of the negative electrode tabs 110 constituting the negative electrode tab bundle B is bent such that the convex portion 111 and the concave portion 112 are successively formed except for the flat portion 113 at the tip end thereof.

Here, the flat portion 113 is a part to which an electrode lead, a description of which will follow, is coupled, and is preferably pre-welded.

Although FIG. 2 shows one convex portion and one concave portion, this is only an example, and two or more convex portions and two or more concave portions may be provided.

As such, the electrode assembly according to the present invention is configured in the form in which the length margin of the electrode tab is secured, i.e., the form in which the electrode tab bundle is loosely bent rather than taut, whereby it is possible to minimize the breakage of the electrode tabs even though the electrode assembly moves in the longitudinal direction (the X-axis direction) or swells in a Y-axis direction.

Meanwhile, the negative electrode 100 is manufactured by applying a slurry mixture of a negative electrode active material and a binder to a negative electrode current collector.

As the negative electrode active material, for example, there may be used carbon, such as non-graphitizing carbon or graphite-based carbon; a metal composite oxide, such as LiₓFe₂O₃ (0≤x≤x1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₃, or a mixture thereof; however, the present invention is not limited thereto.

In addition, the positive electrode 300 is manufactured by applying a slurry mixture of a positive electrode active material and a binder to a positive electrode current collector.

The positive electrode active material may be constituted, for example, by a layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₂; a Ni-sited lithium nickel oxide represented by the chemical formula LiNi₂₋ₓMₓO₂ (where M = Co, Mn, Al, Cu, Fe, Mg, B, or Ga, and x = 0.01 to 0.3); a lithium manganese composite oxide represented by the chemical formula LiMn_{2- x}MₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

Meanwhile, each of the negative electrode current collector and the positive electrode current collector is constituted by a portion to which the slurry including the active material is applied and an uncoated portion to which no slurry is applied. The uncoated portion is cut to form the electrode tabs, more specifically the negative electrode tab 110 and the positive electrode tab 310.

A thin insulating film having high ionic permeability and mechanical strength is used as the separator 200, which is interposed between the negative electrode 100 and the positive electrode 300. The pore diameter of the separator is generally 0.01 um to 10 um, and the thickness of the separator is generally 5 um to 300 um. A sheet or nonwoven fabric made of, for example, an olefin-based polymer, which is chemically resistant and hydrophobic, such as polypropylene, fiberglass, or polyethylene, may be used as the separator; however, the present invention is not limited thereto.

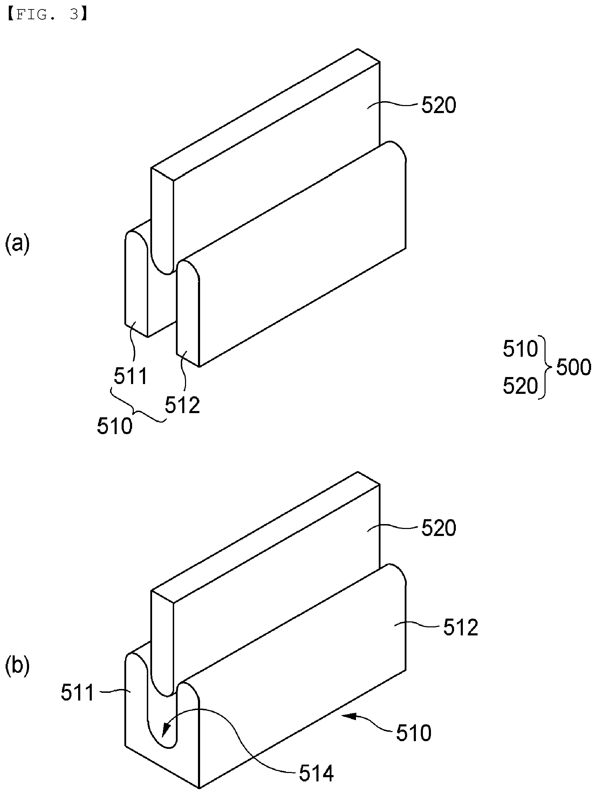

FIG. 3 is a perspective view of electrode assembly tab bundle forming apparatuses according to a first embodiment and a second embodiment of the present invention, wherein (a) shows a tab bundle forming apparatus according to a first embodiment and (b) shows a tab bundle forming apparatus according to a second embodiment.

First, the electrode assembly tab bundle forming apparatus 500 according to the first embodiment will be described with further reference to FIG. 2. The electrode assembly tab bundle forming apparatus includes a first die 510 located at a first surface of a tab bundle, i.e., a lower surface of the tab bundle B in FIG. 2, and a second die 520 located at an upper surface of the tab bundle B corresponding to a second surface of the tab bundle.

The first die 510 includes a first guide portion 511 and a second guide portion 512 spaced apart from each other by a predetermined distance. The second die 520 is located so as to face a gap between the first guide portion 511 and the second guide portion 512 of the first die 510.

As the second die 520 is inserted into the gap between the first guide portion 511 and the second guide portion 512, the tab bundle is pressed, and as a result, the tab bundle is bent such that a convex portion and a concave portion are successively formed.

Meanwhile, the ends of the first guide portion 511 and the second guide portion 512 facing the first surface of the tab bundle are preferably convex upward, whereas the end of the second die 520 facing the second surface of the tab bundle is preferably convex downward.

As such, the ends of the first guide portion 511, the second guide portion 512, and the second die 520 are formed so as to be convex, whereby it is possible to minimize damage to the electrode tabs during bending of the tab bundle.

In the electrode assembly tab bundle forming apparatus according to the first embodiment, it is preferable for the first guide portion 511 and the second guide portion 512 constituting the first die 510 to be independently driven. In other words, it is preferable for the first guide portion 511 and the second guide portion 512 to be independently moved upward and downward and furthermore to be operated such that the distance therebetween is increased or decreased. The reason for this is that it is possible to variously realize the bent shape of the tab bundle.

Although not shown in the figures, a cylinder (not shown) or a driving shaft may be further provided at each of the first guide portion 511 and the second guide portion 512 in order to drive the first guide portion and the second guide portion.

The electrode assembly tab bundle forming apparatus according to the second embodiment is identical to the electrode assembly tab bundle forming apparatus according to the first embodiment described above except for the first die. Hereinafter, therefore, only the first die 510 will be described

Ends of a first guide portion 511 and a second guide portion 512 constituting the first die 510 are convex upward, and lower ends thereof are connected to each other, whereby the first guide portion and the second guide portion have an integral structure. When the first die is used, therefore, it is difficult to adjust the height of the first guide portion 511 and the second guide portion 512 and to adjust the distance therebetween, but since the first guide portion and the second guide portion are connected to each other so as to have an integral structure, it is possible to form a tab bundle bent in a uniform shape.

Of course, in the first die 510 of the second embodiment, a lower end connection portion between the first guide portion 511 and the second guide portion 512 is provided with a recess 514 having a shape corresponding to a downwardly convex end of the second die 520.

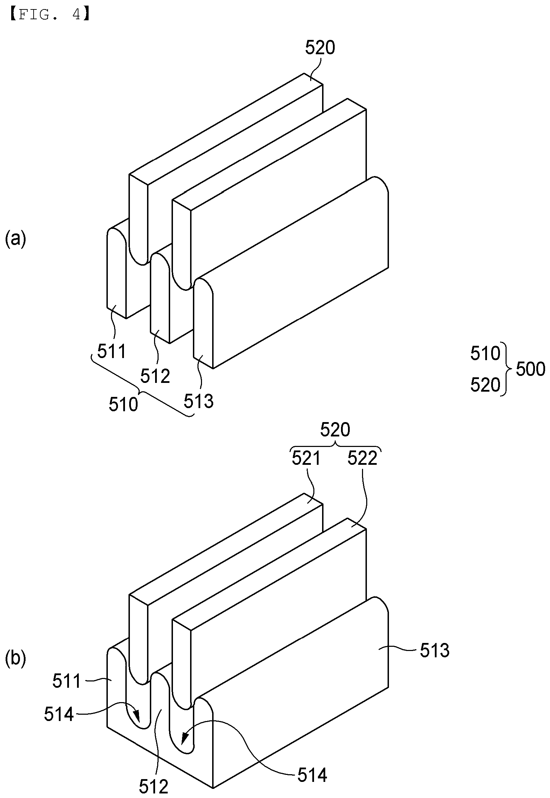

FIG. 4 is a perspective view of electrode assembly tab bundle forming apparatuses according to a third embodiment and a fourth embodiment of the present invention, wherein (a) shows a tab bundle forming apparatus according to a third embodiment and (b) shows a tab bundle forming apparatus according to a fourth embodiment.

When first describing the tab bundle forming apparatus 500 according to the third embodiment, a first die 510 includes a first guide portion 511, a second guide portion 512, and a third guide portion 513, and a second die 520 includes a first pressing portion 521 and a second pressing portion 522 configured to be separately or independently driven.

Of course, the third embodiment is identical to the first embodiment described above except that the first pressing portion 521 is moved to a gap between the first guide portion 511 and the second guide portion 512 and the second pressing portion 522 is moved to a gap between the second guide portion 512 and the third guide portion 513.

The tab bundle forming apparatus according to the fourth embodiment is identical to the tab bundle forming apparatus according to the second embodiment described above except that a first die 510 includes a first guide portion 511, a second guide portion 512, and a third guide portion 513, lower ends of which are connected to each other so as to have an integral structure having recesses 514 and a second die 520 includes a first pressing portion 521 and a second pressing portion 522 configured to be separately or independently driven.

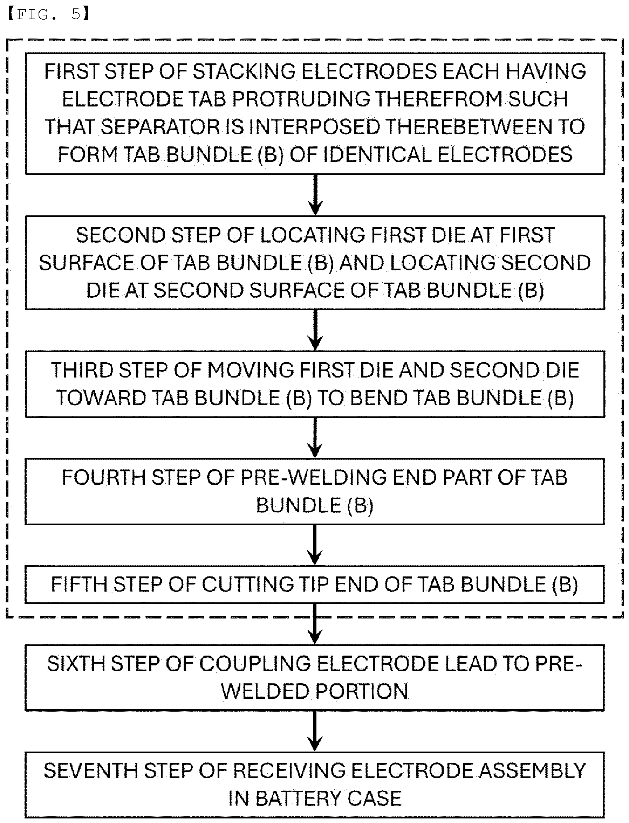

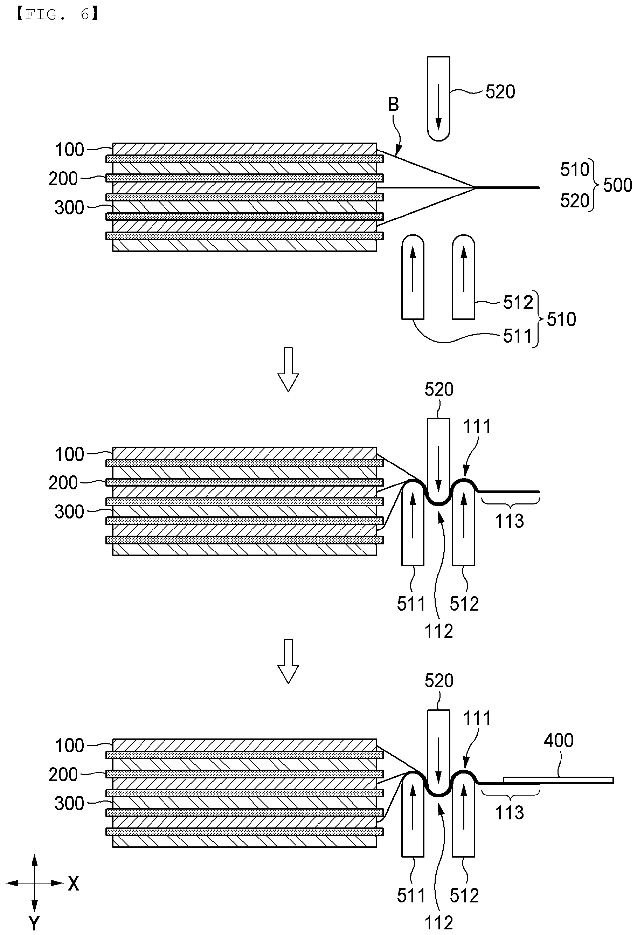

Hereinafter, an electrode assembly manufacturing method according to the present invention will be described. FIG. 5 is a flowchart of an electrode assembly manufacturing method according to the present invention, and FIG. 6 is a schematic view showing an electrode assembly manufacturing process according to the present invention.

Referring to FIGs. 5 and 6, the electrode assembly manufacturing method according to the present invention includes a first step of stacking a plurality of electrodes each having an electrode tab protruding therefrom such that a separator is interposed therebetween to form a tab bundle B of identical electrodes, a second step of locating a first die 510 at a first surface of the tab bundle B and locating a second die 520 at a second surface of the tab bundle B, a third step of moving the first die 510 and the second die 520 toward the tab bundle B to bend the tab bundle B, a fourth step of pre-welding an end part of the tab bundle B, and a fifth step of cutting a tip end of the tab bundle B.

Although the first to fifth steps have been described above as being performed through the tab bundle forming apparatus according to the first embodiment by way of example, it is obvious that the electrode assembly may be manufactured using the forming apparatus according to any one of the second to fourth embodiments. In addition, the specific configuration and operating principle of the forming apparatus have already been described, and therefore a duplicate description will be omitted.

Meanwhile, after pre-welding of the fourth step, the lengths of the electrode tabs are not uniform at a tip end of the tab bundle, i.e., one tip end of each flat portion. Consequently, the fifth step is preferably performed to cut tip ends of the electrode tabs such that the tip ends of the electrode tabs are uniform before an electrode lead is coupled thereto.

Meanwhile, at the time of manufacturing a secondary battery, a sixth step of coupling an electrode lead to the pre-welded portion after the fifth step and a seventh step of receiving the electrode assembly manufactured through the first to fifth steps in a battery case are further performed. The sixth step and the seventh step are known, and therefore a detailed description thereof will be omitted.

Those skilled in the art to which the present invention pertains will appreciate that various applications and modifications are possible within the category of the present invention based on the above description.

### (Description of Reference Symbols)

100: Negative electrode
110: Negative electrode tab
111: Convex portion
112: Concave portion
113: Flat portion
200: Separator
300: Positive electrode
310: Positive electrode tab
400: Electrode lead
50, 500: Forming apparatus
51, 510: First dies
511: First guide portion 512: Second guide portion
513: Third guide portion 514: Recess
52, 520: Second dies
521: First pressing portion 522: Second pressing portion
B: Tab bundle

## Claims

1. An electrode assembly configured such that a separator is interposed between a plurality of electrodes each having an electrode tab protruding therefrom and the electrode tabs are stacked to form a tab bundle,
wherein the tab bundle defines a convex portion and a concave portion successively formed so as to extend in a longitudinal direction of the electrodes.

2. The electrode assembly according to claim 1, wherein one end of the tab bundle in tight contact with an electrode lead is a flat portion.

3. The electrode assembly according to claim 2, wherein the flat portion is pre-welded.

4. The electrode assembly according to claim 2, wherein the convex portion and the concave portion are formed at a remaining part of the tab bundle excluding the flat portion.

5. The electrode assembly according to claim 1, wherein the convex portion and the concave portion are successively formed in each of the electrode tabs comprising the tab bundle.

6. An electrode assembly tab bundle forming apparatus for manufacturing the electrode assembly according to any one of claims 1 to 5, the electrode assembly tab bundle forming apparatus comprising:
a first die configured to be disposed at a first surface of the tab bundle; and
a second die configured to be disposed at a second surface of the tab bundle,
wherein the first die comprises at least two guide portions spaced apart from each other by a predetermined distance, and the second die is configured to face a gap defined between the at least two guide portions of the first die.

7. The electrode assembly tab bundle forming apparatus according to claim 6, wherein an end of each guide portion configured to face the first surface of the tab bundle is convex.

8. The electrode assembly tab bundle forming apparatus according to claim 6, wherein an end of the second die facing the second surface of the tab bundle is convex.

9. The electrode assembly tab bundle forming apparatus according to claim 6, wherein the at least two guide portions of the first die are configured to be driven independently from one another.

10. The electrode assembly tab bundle forming apparatus according to claim 6, wherein lower ends of the at least two guide portions of the first die are connected to each other so as to have an integral structure.

11. The electrode assembly tab bundle forming apparatus according to claim 10, wherein a connection portion between the at least two guide portions has a recess having a shape corresponding to an end of the second die.

12. The electrode assembly tab bundle forming apparatus according to claim 11, wherein
the end of the second die is convex, and
the recess is concave.

13. A method of manufacturing the electrode assembly according to any one of claims 1 to 5, the method comprising:
a first step of stacking a plurality of electrodes each having an electrode tab protruding therefrom such that a separator is interposed therebetween to form a tab bundle of identical electrodes;
a second step of locating a first die at a first surface of the tab bundle and locating a second die at a second surface of the tab bundle; and
a third step of moving the first die and/or the second die toward the tab bundle to bend the tab bundle, wherein
the first die comprises at least two guide portions spaced apart from each other by a predetermined distance, an end of each of the at least two guide portions facing the first surface being convex, and
the second die faces a gap defined between the at least two guide portions of the first die, an end of the second die being convex.

14. The method according to claim 13, further comprising a fourth step of pre-welding an end part of the tab bundle.

15. The method according to claim 14, further comprising a fifth step of cutting a tip end of the tab bundle.
